# EUROPEAN PATENT APPLICATION

(11) **EP 1 128 325 A1**
(43) Date of publication of application: **29.08.2001**
(21) Application number: 00660034.0
(22) Date of filing: 25.02.2000
(51) Int. Cl.: G06K 19/06, B41M 3/14

(54) **Mark and method for marking and identifiying a product**

(71) Applicant: VALTION TEKNILLINEN TUTKIMUSKESKUS, 02150 Espoo 15 (FI)
(72) Inventor: Rosenberg, Rolf, FIN-FIN-02044 VTT (FI); Epstein, Mikael, FIN-FIN-02044 VTT (FI); Koukkari, Pertti, FIN-FIN-02044 VTT (FI)
(74) Representative: Helino, Timo Kalervo

(57) **Abstract**

The invention concerns a mark and a method for the marking and identification of a product. The mark is a chemical mark and is placed substantially in conjunction with the product so that it can be identified by a chemical method of analysis. According to the invention, the mark consists of at least two elements and/or compounds whose mixture ratio is exactly defined.

## Description

The present invention relates to a mark as defined in the preamble of claim 1 and to a method for marking and identifying a product as defined in the preamble of claim 5.

In the present context, 'mark' refers to an object, pattern, composition, symbol, trace, substance or the like, added to a product to indicate or declare a given circumstance. In this context, 'mark' does not mean a radioactive isotope or equivalent whose passage e.g. in an organism, in a pipe system, in the air or other medium or equivalent can be monitored.

In this application, 'product' refers to a preparation, commodity or equivalent, obtained as a result of production or from nature. The product may be a substance, composition, object or equivalent, created as a result of physical, chemical or physiological activity. 'Product' may refer to a finished product, a semi-finished product, a final and/or immediate product of a given process. The product may be in a gaseous, liquid or solid state.

Various products, e.g. bank notes, passports, securities, credit cards, tickets, branded clothes, phonograms, recordings etc. have been marked for later identification. Recognizing the genuineness of a product and distinguishing a product from fakes is important e.g. in the case of the above-mentioned products or medicaments or the like. In prior art, visible marks, such as holograms, seals, stamps, verification strips, logos and equivalent are known.

A problem often associated with known marks is that they are subject to wear, poorly visible or hidden in the background and, on the other hand, that they are detectable, which makes them easier to forge or copy. A further problem with previously known marks is that they are not suited for the indication of authenticity of e.g. chemical product applications.

The object of the invention is to eliminate the problems referred to above and to disclose a new usable mark and method for marking a product. A further object of the invention is to disclose a mark and a method that is easy and economic to implement.

The mark and method of the invention are characterized by what is presented in the claims.

The basic idea of the invention is that a chemical mark designed for the marking and identification of a product substantially consists of at least two elements and/or compounds, which may be any identifiable elements and/or compounds, e.g. inorganic or organic compounds, ions and/or equivalent. The ratio of mixture of the elements and/or compounds contained in the mark is exactly defined.

The element and/or compound used in the mark depends on the product and its chemical composition. The mark may be in a gaseous, liquid or solid state, and it is placed substantially in conjunction with the product so that it can be identified or determined by a chemical method of analysis known in itself.

In an embodiment of the invention, the concentrations of the elements and/or compounds used are closely defined. In an embodiment of the invention, the quantities of the elements and/or compounds are exactly defined.

In an embodiment of the invention, the mark is substantially invisible, e.g. a substance or composition. The mark may naturally also be a concrete visible mark, such as an object or trace.

The mark may be added to the product by any known method. Further, the mark may be added to any part of the product.

In an embodiment of the invention, the mark is added to the product by mixing, diffusing, dissolving and/or by a corresponding method.

In an embodiment of the invention, the mark is added substantially to the surface of the product. The mark may be added to the surface of the product by coating, gluing, electrolyzing, sputtering, evaporating and/or by other methods.

In an embodiment of the invention, the mark is placed in an essential component comprised in the product, which component may be a colorant, glue, pigment, binder, filler or the like.

The mark may naturally be added to the product at any stage. The mark may be added to the product e.g. in conjunction with its manufacture or to the finished product.

As a method of analysis for the determination and identification of the mark, it is possible to use e.g. a chromatographic method, such as gas, liquid and/or ion chromatography, and/or a spectrometric method, such as mass spectroscopy, IR spectroscopy and/or atomic spectrometry, or any other known method of analysis. The mark may be identified/determined e.g. by a qualitative or quantitative method on the basis of absolute concentrations or absolute quantities of the elements and/or compounds or merely their mixture ratio. The mark may naturally also be identified by any other method known in itself.

In a preferred embodiment of the invention, the mark is read by using laser induced atomic emission spectrometry, e.g. LIBS (laser induced breakdown spectrometry), LIPS (laser induced plasma spectrometry) or LIAES (laser induced atomic emission spectrometry).

The mark and method of the invention make it possible to mark different products, such as concrete objects, chemical compositions and so on, to permit their identification.

The invention has the advantage that the mixture ratio of the elements and/or compounds used, alone or together with the total quantities and/or concentrations of the elements and/or compounds, accurately individualizes the mark and therefore the product and thus easily documents the origin and genuineness of the product. The mark of the invention can accompany the product substantially throughout its life span. Regardless of partial decay, wear or dilution of the mark, the mark remains identifiable at different stages during its life span. A mark consisting of e.g. two elements A and B can be identified on the basis of the original mixture ratio a/b of the elements at any stage. On the other hand, based on the initial quantities a₁ and b₁ and mixture ratio a₁/b₁ of the elements, it is possible to determine the quantities a₂ and b₂ of the elements contained in the mark at different stages because the mixture ratio a₂/b₂ is equal to a₁/b₁.

The invention makes it possible to establish the origin of a product e.g. in the case of reclamation concerning the product. In addition, the mark of the invention allows identification of a product, e.g. a product certified in respect of quality and/or environmental effects, at different stages during its life span.

A further advantage of the mark of the invention is that it is easily identifiable/determinable by methods of analysis known in themselves.

An embodiment of the invention additionally has the advantage that the mark is substantially invisible, so it is not easy to copy.

Marks as provided by the invention can be used e.g. in chemical products and compositions, securities, branded products, environmentally certified products, printing inks, glues, and so on.

In the following, the invention is described in detail by the aid of a few examples of its embodiments.

### Example 1.

For chemical identification of tickets of admission and lottery tickets on the basis of elementary substances, the printing paper and/or ink used in them is marked with an indiscernible inert and stable chemical mark consisting of salts or oxides or other compounds of any elementary substances, e.g. transition metals, such as wolfram, hafnium, rhenium etc., or preferably metals belonging to the lanthanide group. The concentration of the mark e.g. in the filler used in paper is e.g. 10 - 100 ppm by weight.

The mark is mixed in a component of the product, such as a pigment, filler and/or binder. In a preferred case, the mark is mixed with a substance belonging to the product before its addition to the product.

The marker and its quantity in the product are analyzed e.g. by means of a laser-induced reader based on emission spectroscopy (LIBS) or on element-specific fluorescent radiation produced by ultraviolet or infrared rays.

### Example 2

For chemical identification of admission and lottery tickets on the basis of a ratio of elements, the printing paper and/or ink used in them is marked with an inert and stable chemical mark consisting of at least two elements. The mark can be identified by the concentration ratio of the substances used, e.g. transition metals, such as wolfram and molybdenum. The markers are added e.g. in the form of salts or oxides of the metals or by using an applicable metal organic precursor. The total concentration of the mark e.g. in the filler used in the paper is e.g. 100 - 500 ppm by weight.

The mark is mixed in a component of the product as in example 1. The mark can be identified as described in example 1.

### Example 3

To mark a passport with a national insignia, an invisible and indiscernible chemical mark is added to it. The mark is preferably placed in an exactly defined location in the passport, e.g. in a laminated identifying strip or in a pattern printed on the base material of the passport. The mark can be identified by the ratio of any, e.g. 2 - 3 elements comprised in it. The maximum total amount of the elements in the passport page is e.g. 500 ppm by weight. The mark is identified e.g. by means of a reader (Example 1) and/or via laboratory analysis.

### Example 4

A trademark or stamp, such as the manufacturer's logo or any identifier or the like provided in the product to indicate a manufacturer, trademark or brand is marked with a chemical mark, which is placed e.g. in the ink, pigment and/or base material of the identifier. The mark consists of two or more elements, which may be any elementary substances. The elements, their quantity, concentration and/or ratio of concentrations are preferably exactly predetermined. Depending on the application of the product, the mark is identified e.g. by means of a fast reader and/or via laboratory analysis.

### Example 5

EURO bank notes can be marked with a chemical symbol identifying the country and value.

In the printing ink used in the bank note, e.g. three metallic salts, such as lanthanum, neodymium and europium salt, are mixed in exactly predetermined proportions. The total concentration of these is small, e.g. of the order of 500 µg/g of ink. Thus, when the bank notes are being printed, a chemical identifier, i.e. mark, is included in them. The mark may be added to the primer, in which case it will be uniformly distributed in the entire bank note, or it may be placed in a given color and/or pattern in the bank note.

Bank notes of different values and of different countries can be marked by giving each one of them a specific identifier. Further, bank note sorters used by the central banks in different countries can be provided with sensors based e.g. on the LIBS principle for reading the identifiers. This makes it possible to identify counterfeit notes while at the same time obtaining statistical information as to how bank notes printed in different countries are circulated to different other countries.

Different embodiments of the mark and method of the invention are applicable for the marking and identification of any product.

The embodiments of the invention are not restricted to the examples presented above, but they may be varied in the scope of the following claims.

## Claims

1. Mark for the marking and identification of a product, said mark being of a chemical nature and consisting substantially of at least one element and/or compound and being substantially placed in conjunction with the product so that it can be identified by a chemical method of analysis, **characterized** in that the mark consists of at least two elements and/or compounds whose mixture ratio is exactly defined.

2. Mark 1 as defined in claim 1, **characterized** in that the concentration of the element and/or compound is exactly defined.

3. Mark as defined in claim 1 or 2, **characterized** in that the quantity of the element and/or compound is exactly defined.

4. Mark as defined in any one of claims 1-3, **characterized** in that the mark is substantially invisible.

5. Method for marking and identifying a product by means of a mark, the product being provided with a mark which is of a chemical nature and which substantially consists of at least one element and/or compound and is placed substantially in conjunction with the product so that it can be identified by a chemical method of analysis, **characterized** in that the mark consists of at least two elements and/or compounds whose mixture ratio is exactly defined.

6. Method as defined in claim 5, **characterized** in that the concentration of the element and/or compound contained in the mark is exactly defined.

7. Method as defined in claim 5 or 6, **characterized** in that the quantity of the element and/or compound contained in the mark is exactly defined.

8. Method as defined in any one of claims 5-7, **characterized** in that the mark is added to the product by mixing, diffusing, dissolving and/or by a corresponding method.

9. Method as defined in any one of claims 5-8, **characterized** in that the mark is added substantially to the surface of the product.

10. Method as defined in any one of claims 5 - 9, **characterized** in that the mark is added to the surface of the product by coating, gluing, electrolyzing, sputtering, evaporating and/or by a corresponding method.

11. Method as defined in any one of claims 5 - 10, **characterized** in that the mark is placed in an essential component comprised in the product.

12. Method as defined in claim 11, **characterized** in that the component comprised in the product is an ink, glue, pigment, binder, filler or the like.

13. Method as defined in any one of claims 5 - 12, **characterized** in that the mark is so placed that it remains substantially invisible.

14. Method as defined in any one of claims 5 - 13, **characterized** in that the mark is read using laser-induced atomic emission spectrometry.

15. Method as defined in claim 14, **characterized** in that the mark is read using LIBS, LIPS or LIAES spectrometry.
